# EUROPÄISCHE PATENTSCHRIFT

(11) **EP 0 666 996 B1**
(45) Veröffentlichungstag und Bekanntmachung des Hinweises auf die Patenterteilung: **04.06.1997**
(21) Anmeldenummer: 94900083.0
(22) Anmeldetag: 28.10.1993
(51) Int. Cl.: G02B 6/42

(54) **VORRICHTUNG ZUM ÜBERTRAGEN VON DATEN**
DATA TRANSMISSION DEVICE
DISPOSITIF DE TRANSMISSION DE DONNEES

(30) Priorität: 30.10.1992 DE 4236704
(43) Veröffentlichungstag der Anmeldung: 16.08.1995
(73) Patentinhaber: WOLTER, Klaus, D-40625 Düsseldorf (DE); HENKE, Dieter, D-40625 Düsseldorf (DE)
(72) Erfinder: WOLTER, Klaus, D-40625 Düsseldorf (DE); HENKE, Dieter, D-40625 Düsseldorf (DE)
(74) Vertreter: Cohausz & Florack
(86) Internationale Anmeldenummer: EP9303009
(87) Internationale Veröffentlichungsnummer: WO9410594

(56) Entgegenhaltungen:
- EP-A- 0 428 159
- WO-A-91/08498
- US-A- 4 155 159
- US-A- 4 678 264
- US-A- 5 159 654
- PATENT ABSTRACTS OF JAPAN vol. 11, no. 174 (E-513)4. Juni 1987 & JP,A,62 008 626 (NEC)
- PATENT ABSTRACTS OF JAPAN vol. 7, no. 202 (P-221)7. September 1983 & JP,A,58 100 112 (FUJITSU)

## Beschreibung

Die Erfindung betrifft eine Vorrichtung zum Übertragen von Daten gemäß dem Oberbegriff des Anspruchs 1.

Eine Vorrichtung dieser Art ist aus der US 4 678 264 bekannt. Ein solches Stecker-Buchse-System kann grundsätzlich zur bidirektionalen Datenübertragung eingesetzt werden. Dabei sind mehrere Fasern und Sender bzw. Empfänger lösbar miteinander verbunden. Aus der JP-A-62-008626 ist bekannt, parallele Datenverarbeitung mittels einer entsprechenden Anzahl parallel geführter Fasern durchzuführen.

Datenübertragunsleitungern, die zur Übertragung von codierten Lichtsignalen über Lichtwellenleiter geeignet sind, bestehen nach einem aus der Praxis bekannten Stand der Technik aus einem zentralen Stützelement, auf dem Schutzhüllen für die einzelnen Lichtwellenleiter abgestützt sind. Die Lichtwellenleiter selbst, die in den meisten Fällen aus Glasfasern bestehen, liegen einzeln in diesen Schutzhüllen ein, welche wiederum von einer gemeinsamen Folienumspannung, einer Gewebeeinlage und einem weiteren gemeinsamen Schutzmantel aus einem Kautchuckmaterial umgeben sind. Derartig aufgebaute Datenübertagungsleitungen werden wegen der einzelnen Anordnung jedes Lichtwellenleiters in einer eigenen Schutzhülle in der Fachwelt als "Hohlleiter" bezeichnet. Der Grund für den aufwendigen Schutz der Einzelfasern in derartigen Datenübertragungsleitungen besteht darin, daß die einzelnen Fasern durch den Schutzmantel frei von mechanischen Belastungen gehalten werden sollen und daß ein Eindringen von Flüssigkeit in die Leitung verhindert werden soll.

Neben den als Hohlleitern ausgebildeten Datenübertragungsleitungen sind auch Lichtwellenleiter aufweisende Leitungen bekannt, bei denen eine Vielzahl von Einzelfasern als sog. "Bündeladern" in einem gemeinsamen Schutzmantel einliegen. Derartige Bündeladern werden z.B. im Bereich der Chirurgie oder der Micro-Kameratechnik zur Übertragung von durch eine konstant leuchtende Lichtquelle abgegebenem Licht an einen schwer zugänglichen Ort genutzt.

Ein zum Verbinden von Datenleitungen geeignetes Kupplungselement ist aus der deutschen Patentschrift DE 31 13 168 C2 bekannt. Bei diesem Kupplungselement handelt es sich um einen Leitungsstecker, der so ausgebildet ist, daß die in ihm mündenden Lichtwellenleiter in einem Radius geführt werden können, der ihre Beschädigung ausschließt. Dabei weist der bekannte Leitungsstecker Ausnehmungen auf, in die modulartig gestaltete Wandlerschaltungen einsetzbar sind. Die Wandlerschaltungen wandeln die durch die Lichtwellenleitern übertragenen Lichtsignale unmittelbar in elektrische Signale um und weisen Anschlüsse auf, über die die Wandlerschaltungen an eine Einrichtung zur Weiterverarbeitung der von ihnen gelieferten elektrischen Signale anschließbar sind.

Schließlich ist aus der deutschen Offenlegungsschrift DE 31 16 252 Al ein auf eine einen Lichtwellenleiter enthaltende Leitung aufsteckbarer opto-elektronischer Wandler bekannt. Dieser Wandler weist eine äußere und eine innere Hülse auf, die gemeinsam sicherstellen, daß der scheibenförmig ausgebildete Sensor des Wandlers zentriert zur Stirnfläche des Lichtwellenleiters angeordnet ist.

Die Aufgabe der Erfindung besteht darin, eine einfach herstellbare und kompakt zu integrierende Vorrichtung der eingangs genannten Art zu schaffen.

Diese Aufgabe wird erfindungsgemäß durch eine Vorrichtung mit den Merkmalen des Anspruchs 1 gelöst.

Die Erfindung zeichnet sich dadurch aus, daß durch die Art der Beschaltung ein temperaturkompensiertes Empfängerbauteil ermöglicht wird, welches einfach und kompakt zu integrieren ist und damit ganz im zweiten Kupplungselement untergebracht werden kann, so daß dem Anwender eine größere Flexibilität bei der Konfiguration des Steckersystems geboten wird, da die Bauteile in den Aufnahmeöffnungen des zweiten Kupplungselementes austauschbar angeordnet werden können.

Da gemäß der Erfindung die Datenübertragungsleitung mindestens acht als Lichtwellenleiter ausgeführte Einzelleitungen enthält, ist sie besonders zur schnellen parallelen Datenübertragung geeignet, da die einzelnen Bits des Datenwortes gleichzeitig über die ihnen jeweils separat zugeordneten Lichtleiter übertragen werden. Dabei ist eine Beeinflussung der Datenübertragung durch elektromagnetische Strahlung ausgeschlossen. Zudem können mittels der erfindungsgemäßen Vorrichtung, da die Übertragung nahezu verlustfrei erfolgt, parallele Daten mit hohen Übertragungsgeschwindigkeiten über weite Strecken übertragen werden.

Die einzelnen jeweils zur Übertragung der Lichtsignale bestimmten Lichtwellenleiter sind nach Art von Bündel adern ungeschützt in einem gemeinsamen Mantel verlegt. Jeder Lichtwellenleiter dient zur Übertragung eines eigenständigen Lichtsignals. Dabei ist die Gefahr einer mechanischen Beschädigung der Lichtwellenleiter dadurch vermindert, daß die Enden der Lichtwellenleiter in den Kupplungselementen geführt sind. Ein aufwendiger Schutz jedes einzelnen Lichtwellenleiters kann entfallen, so daß die erfindungsgemäße Datenübertragungsleitung zu einem erheblich günstigeren Preis mit wesentlich verringertem Materialeinsatz herstellbar ist als die bekannten Leitungen. Indem zusätzlich die Stirnseiten der Lichtwellenleiter unmittelbar im Bereich der Stirnfläche des Kupplungselements angeordnet sind, kann die Datenübertragungsleitung unmittelbar an entsprechend ausgebildete Kupplungselemente angeschlossen werden, ohne daß es einer aufwendigen Anordnung von Wandlerschaltungen oder weiteren Ankopplungsmaßnahmen in dem Kupplungselement bedarf.

Weitere vorteilhafte Ausgestaltungen der Erfindung sind den Unteransprüchen zu entnehmen und werden im folgenden erläutert.

Die Anordnung der Öffnungen der Kupplungselemente sollte rasterförmig erfolgen, um deren Verwendbarkeit in Verbindung mit bestehenden Industriestandards zu vereinfachen oder um einen neuen Industriestandard zu schaffen. Dabei ermöglicht eine versetzte Anordnung der Öffnungen es, eine Vielzahl von Öffnungen auf einer eng begrenzten Fläche unterzubringen. Die Form der Kupplungselemente kann vereinfacht werden, wenn die Öffnungen selbst die Führung der Lichtwellenleiterenden bildet. Dabei kann das Verbinden der Lichtwellenleiter mit den Kupplungselementen dadurch erleichtert werden, daß die Durchgangsöffnungen trichterförmige Aufweitungen aufweisen, durch die die Leiter beim Einschieben in die Öffnung zentriert werden. Die trichterförmige Aufweitung dient darüber hinaus der Vergrößerung des Volumens zur Befestigung, beispielsweise mittels Klebstoffen wie Haftstoffen oder Heißkleber. Hierbei ist besonders vorteilhaft, wenn die Stirnseiten der Leiter bündig mit der Stirnfläche des Kupplungselements ausgerichtet sind, d.h. in der Stirnflächenebene liegen.

Um das Wiederverwerten der erfindungsgemäßen Datenübertragungsvorrichtung zu vereinfachen, wird vorgeschlagen, daß die Kupplungselemente, die Lichtwellenleiter und der gemeinsame Mantel der Lichtwellenleiter aus gemeinsam wiederverwertbaren Kunststoffen bestehen.

Das Gehäuse der Kupplungselemente sollte zur weiteren Vereinfachung seiner Herstellung aus zwei symmetrischen Teilen bestehen.

Eine bevorzugte Einrichtung, die zum Empfang der von der erfindungsgemäßen Vorrichtung übertragenen Lichtsignale besonders geeignet ist, besteht darin, daß der optoelektronische Wandler eine Photodiode zum Umwandeln der Lichtsignale in elektrische Signale und eine Signalumformschaltung zur Umwandlung der Signale in einen digitalen Spannungspegel umfaßt bzw. darin, daß der Signalumformschaltung eine weitere Verstärkerschaltung zum Verstärken der von der Signalumformschaltung gelieferten Signale auf vorgebbare Spannungspegel nachgeordnet ist.

Die in dieser Einrichtung eingesetzten Schaltungen zeichnen sich durch eine hohe Stromempfindlichkeit, eine statische Signalverstärkung sowie durch geringe Verlustleistungen aus. Dabei ermöglicht die erfindungsgemäße Einrichtung beliebige Ausgangssignalpegel, wobei die Anstiegszeit und die Signallaufzeit allein abhängig ist von der Qualität des lichtempfindlichen Sensors.

Wie die Einrichtung zum Empfangen der Signale zeichnet sich auch die Vorrichtung zum Senden der Lichtsignale durch besondere Einfachheit aus, wobei bei dieser Schaltung ein Variieren der ausgesendeten Lichtleistung durch einfache Mittel möglich ist, wenn der elektrooptische Wandler eine Treiberschaltung aufweist, die ein von einer Codiereinrichtung geliefertes Spannungssignal auf den zum Betrieb des elektrooptischen Wandlers notwendigen Pegel verstärkt.

Die erfindungsgemäße Vorrichtung ist aus den vorstehend ausgeführten Gründen besonders zum Übertragen paralleler Daten geeignet. In Abhängigkeit von der Anzahl der einzelnen Fasern können zusätzlich zu einer parallelen Übertragung auch seriell codierte Informationen über die Vorrichtung übertragen werden. Die parallele Datenübertragung kann nach dem Centronics oder dem IEEE 488-Standard erfolgen. Auch ist es möglich, daß die erfindungsgemäße Vorrichtung Teil eines Bus-Transceivers ist.

Nachfolgend wird die Erfindung anhand einer ein Ausführungsbeispiel darstellenden Zeichnung näher erläutert. Es zeigen:
Fig. 1 den einen Teil eines als Stecker ausgebildeten ersten Kupplungselements in Aufsicht, der Teil der erfindungsgemäßen Vorrichtung zur Übertragung von Daten ist;
Fig. 2 eine frontale Ansicht des Kupplungselements nach Fig. 1;
Fig. 3 den Schnitt eines als Buchse ausgebildeten zweiten Kupplungselements in Aufsicht, ebenfalls gemäß der vorliegenden Erfindung;
Fig. 4 einen Schaltplan einer Einrichtung zum Empfangen codierter Lichtsignale.

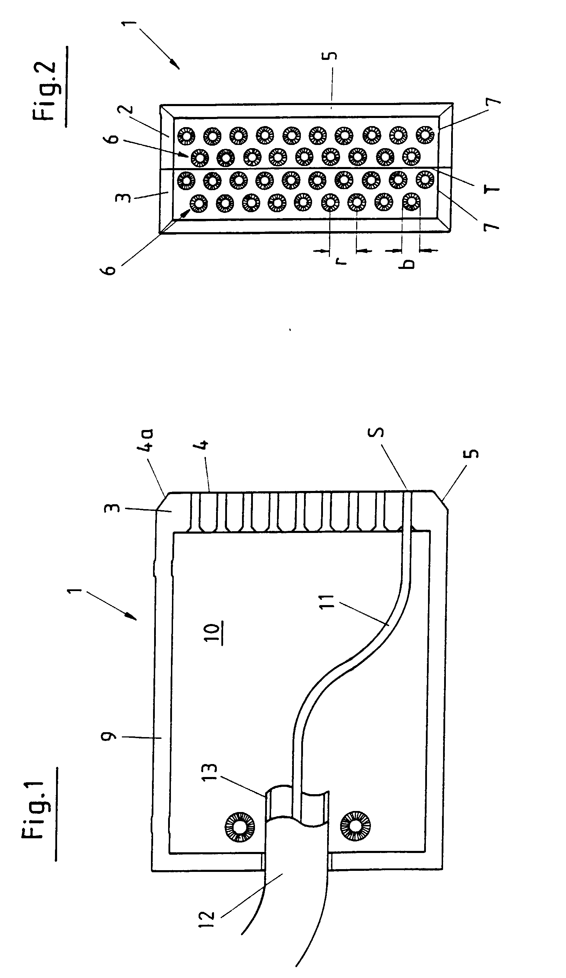

Das in den Figur 1 und 2 gezeigte, als Stecker ausgebildete Kupplungselement 1 ist in zwei symmetrische Teile 2,3 geteilt, wobei die Teilungsebene T senkrecht zur Stirnseite 4 des Kupplungselements 1 ausgerichtet ist. Die Teile 2,3 sind durch nicht gezeigte Schnapp- oder Schraubverbindungen lösbar miteinander verbunden. Das Kupplungsstück 1 weist eine im Ganzen quaderförmige Form auf. In seine Stirnseite 4, deren Randbereich 4a gegenüber der Stirnseite 4 zurückweichend angeschrägt sind, sind Durchgangsöffnungen 5 eingeformt.

Die Durchgangsöffnungen 5 sind in einem konstanten Raster r beabstandet zueinander in parallelen Reihen 6,7 angeordnet, wobei die Reihen 6 gegenüber den Reihen 7 um die Breite b einer Durchgangsöffnung 5 versetzt sind. Sie weisen in ihrem der Stirnseite 4 abgewandten Abschnitt trichterförmige Erweiterungen 8 auf, die in dem von den Wandungen 9 der Teile 2,3 umschlossenen Raum 10 münden.

Jede der Durchgangsöffnungen 5 dient als Führung für das Ende jeweils eines Lichtwellenleiters 11, welcher jeweils derart in die ihm zugeordnete Durchgangsöffnung 5 eingeführt ist, daß seine Stirnseite S bündig mit der Stirnseite 4 des Kupplungselements 1 ausgerichtet ist. Die Lichtwellenleiter 11 sind Teil einer Datenübertragungsleitung 12, an deren Enden jeweils eins der Kupplungselemente 1 befestigt ist. Die Lichtwellenleiter 11 liegen ohne einen eigenen gesonderten Schutz in einem gemeinsamen Mantel 13 der Datenübertragungsleitung 12 ein.

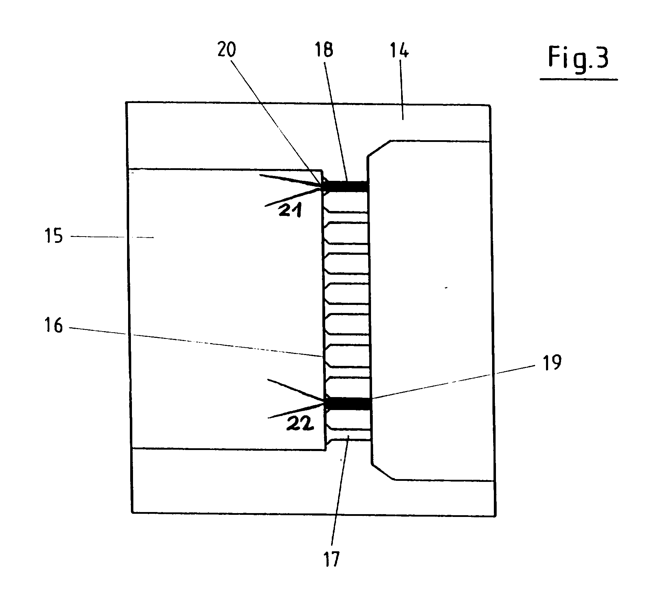

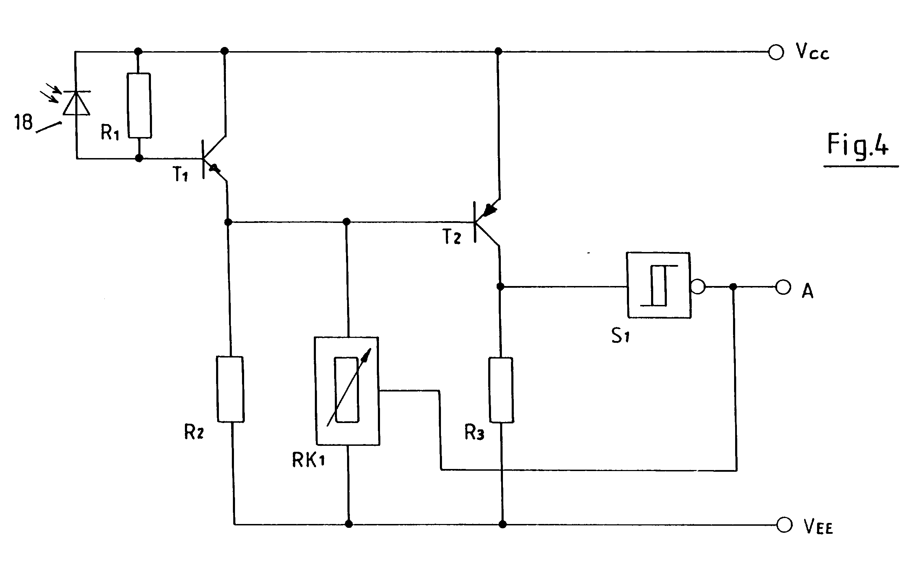

Fig. 3 zeigt ein als Buchse ausgebildetes zweites Kupplungselement 14, welches einstückig gefertigt ist und als Anschluß einer nicht gesondert gezeigten Einrichtung zum Senden und Empfangen von codierten Lichtsignalen dient. Das Kupplungselement 14 weist eine erste Ausnehmung 15 auf, deren Form der Form des Kupplungselementes 1 entspricht, so daß dieses in die Ausnehmung 15 formschlüssig einführbar ist. In die Grundwand 16 der Ausnehmung 15 sind Durchgangsöffnungen 17 eingeformt. Sowohl die Form der Durchgangsöffnungen 17 als auch deren Anordnung entsprechen der Form und Anordnung der Durchgangsöffnungen 5 des ersten Kupplungselements 1, so daß die Lichtwellenleiterenden S bündig zu den in der Stirnseite 20 liegenden Durchgangsöffnungen 17 anliegen. In vorgebenen Durchgangsöffnungen 17 kann ein lichtempfindlicher Sensor 18 sitzen, wogegen in anderen Durchgangsöffnungen 17 Lichtsender 19, beispielsweise Leuchtdioden, eingeführt sind. Die Stirnseiten 20 der Sensoren 18 und Lichtsender 19 sind bündig mit der der Ausnehmung 16 zugeordneten Seite 20 der Grundwand 16 ausgerichtet. Die Sensoren 18 sind über Leitungen 21,22 mit der in Fig. 4 gezeigten Schaltung zum Empfangen der von dem jeweiligen Lichtwellenleiter 11 übertragenen codierten Lichtsignale verbunden, während die Lichtsender 19 jeweils an eine nicht gesondert gezeigte Schaltung zum Senden der codierten Lichtsignale angeschlossen sind, die nach üblichen Sendeverfahren arbeitet.

Nach einer nicht in der Zeichnung dargestellten Variante können in den Durchgangsöffnungen 17 auch weitere Lichtwellenleiter einer weiteren Datenübertragungsleitung liegen, wodurch eine einfache und störunanfällige Kopplung beider Leitungen erfolgen kann.

Die Schaltung zum Senden der Lichtsignale kann neben dem Lichtsender 19 eine Treiberschaltung für diesen Emitter 19 umfassen, die an eine Ausgabeeinheit für binäre Signale anschließbar ist. Bei dieser Ausgabeeinheit kann es sich beispielsweise um die Centronics-Schnittstelle eines Personalcomputers handeln. Auch ein Anschluß an eine Schnittstelle, die parallele Signale nach IEEE 488-Standart abgibt, ist ohne weiteres möglich. Die IEEE 488-Schnittstelle ist auch als GPIB-Schnittstelle (GPIB=General Purpose Interface Bus) bekannt.

Die in Figur 4 gezeigte Schaltung zum Empfangen der Lichtsignale umfaßt neben dem genannten, als Photodiode ausgebildeten Sensor 18 einen parallel zu diesem geschalteten Widerstand R1 und einen mit seiner Basis an den Widerstand R1 und den Sensor 18 angeschlossenen Transistor T1. Mit dem Emitter des Transistors T1 sind ein Transistor T2, ein Widerstand R2 sowie ein Anschluß einer Rückkoppeleinheit RK1 verbunden. An den Kollektor des Transistors T2 sind eine invertierende Schwellstufe S1 sowie ein Widerstand R3 angeschlossen. Der Ausgang der Schwellstufe S1 ist mit dem Eingang der Rückkoppeleinheit RK1 verbunden.

In der Schaltung zum Empfangen der Lichtsignale erfolgt die Stromverstärkung auf einfache Weise durch den als Emitterfolger geschalteten Bipolartransistor T1, dessen Ausgangsstrom am Widerstand R2 einen Spannungsabfall verursacht. Der Transistor T2 verstärkt diesen Spannungsabfall, so daß am Widerstand R3 ein in seiner Amplitude vergrößertes, invertiertes Spannungssignal anliegt.

Dieses wird durch die Schwellstufe S1 noch einmal invertiert und auf einen standardisierten Spannungspegel (z.B. nach dem TTL-Standard) begrenzt.

Die Kompensation von durch Temperaturschwankungen ausgelösten Abweichungen bei der Spannungsverstärkung erfolgt dadurch, daß der stromverstärkende Transistor T1 und der spannungsverstärkende Transistor T2 miteinander verknüpft werden, wobei der Transistor T2 zum Transistor T1 komplementär ist und ein ähnliches Temperaturverhalten zeigt. Demzufolge heben sich die Einflüsse der durch eine Temperaturänderung verursachten Drift bei der Verstärkung durch die Transistoren T1,T2 gegenseitig auf. Dabei ist über den Spannungsabfall an R1 und T1 der Arbeitsbereich von T2 so einstellbar, daß ohne ein Eingangssignal vom Sensor 18 der Transistor T2 gerade soviel Strom führt, daß am Ausgang A der Schaltung sicher ein LOW-Pegel vorliegt.

Das Verhalten der vorstehend beschriebenen Schaltung zum Empfangen von Lichtsignalen kann auf einfache Weise dadurch umgekehrt werden, daß der Sensor nicht parallel zum Widerstand R1 sondern in Sperrichtung zwischen die Basis des Transistors T1 und die Spannung V_{SE} geschaltet wird. Bei dieser Betriebsweise werden im Falle der Verwendung von Fotodioden die Flanken des verstärkten Signals versteilert, da an dem Sensor 18 nun eine Sperrspannung anliegt.

Die Schaltung nach Fig. 4 ist über die Elemente S1, RK1 mit einer Rückkopplung versehen. Diese Rückkopplung bewirkt durch Veränderung des Arbeitspunktes des Transistors T2 die Annäherung des Eingangspegels von S1 an dessen jeweilige Schaltschwelle. Hierdurch wird eine direkte Abbildung des Eingangssignals am Empfänger auf den Ausgang A erreicht.

## Patentansprüche

1. Vorrichtung zur Datenübertragung mittels Lichtwellenleiter bestehend aus einer Datenübertragungsleitung, einem ersten mit der Datenübertragungsleitung verbundenen Kupplungselement (1) und einem lösbar an das erste Kupplungselement (1) ankoppelbaren zweiten Kupplungselement (14), welches elektrooptische bzw. optoelektronische Wandler aufweist, wobei beide Kupplungselemente (1,14) im angekoppelten Zustand miteinander fluchtende Durchgangsöffnungen (5,17) aufweisen, in denen die Endfläche des Lichtwellenleiters jeweils dem elektrooptischen bzw. optoelektronischen Wandler zugeordnet gehalten ist,
**dadurch gekennzeichnet, daß** das erste und das zweite Kupplungselement mindestens der Bitzahl des parallel zu übertragenden Mehrbit-Datenwortes entsprechende Durchgangsöffnungen (5,17) aufweist, in denen jeweils ein Lichtwellenleiter der als Lichtwellenleiterbündel ausgebildeten Datenübertragungsleitung gehalten ist und daß in einer Teilmenge der Durchgangsöffnungen (17) des zweiten Kupplungselementes (14) ein optoelektronischer Wandler angeordnet ist, der eine Schaltung mit jeweils einem komplementären Transistorpaar (T₁,T₂) mit gegenläufigem Temperaturverhalten umfaßt, bei dem der erste Transistor (T₁) als Emitterfolger und der zweite Transistor (T₂) als Spannungsverstärker geschaltet ist, und daß in einer weiteren Teilmenge der Durchgangsöffnungen elektrooptische Wandler oder weitere Lichtwellenleiterenden angeordnet sind.

2. Vorrichtung nach Anspruch 1,
**dadurch gekennzeichnet, daß** die Durchgangsöffnungen (5,17) der Kupplungselemente (1,14) in einem gleichmäßigen Rastermaß (r) beabstandet zueinander angeordnet sind.

3. Vorrichtung nach Anspruch 1 oder 2,
**dadurch gekennzeichnet**, **daß** die Durchgangsöffnungen (5,17) der Kupplungselemente in versetzt zueinander angeordneten Reihen (6,7) angeordnet sind.

4. Vorrichtung nach einem der Ansprüche 1 bis 3,
**dadurch gekennzeichnet, daß** die Durchgangsöffnungen (5,17) kanalförmig ausgebildet sind und auf ihrem der Stirnseite (4,16) des Kupplungsstückes (1,14) abgewandten Abschnitt einen Führungsabschnitt für die ihnen jeweils zugeordneten Lichtwellenleiterenden (11) bzw. optoelektronischen Wandler (18) oder elektrooptischen Wandler (19) bilden.

5. Vorrichtung nach einem der vorhergehenden Ansprüche,
**dadurch gekennzeichnet, daß** jede der Durchgangsöffnungen (5,17) in ihrem dem Innern des Kupplungselementes (1,14) zugeordneten Bereich trichterförmig aufgeweitet ist.

6. Vorrichtung nach einem der vorhergehenden Ansprüche,
**dadurch gekennzeichnet, daß** die Kupplungselemente (1,14), die Lichtwellenleiter (11) und ein die Lichtwellenleiter umschließender Mantel (13) der Datenübertragunsleitung (12) aus gemeinsam wiederverwertbaren Kunststoffen bestehen.

7. Vorrichtung nach einem der vorhergehenden Ansprüche,
**dadurch gekennzeichnet, daß** die Stirnseite (20) der Lichtwellenleiter (11) jeweils planparallel zur Oberfläche der Stirnseite (4,16) der Kupplungselemente (1,14) ausgerichtet ist.

8. Vorrichtung nach einem der vorhergehenden
Ansprüche,
**dadurch gekennzeichnet, daß** ein Kupplungselement (1) als Stecker ausgebildet ist und einen quaderförmigen Abschnitt aufweist, an dessen freiem Ende die Stirnseite (4) des Kupplungselementes (1) ausgebildet ist und daß das jeweils andere Kupplungselement (14) eine entsprechend quaderförmige Aussparung (15) aufweist, in der der Abschnitt des Steckers formschlüssig einführbar ist und in deren Grundwand (16) die Durchgangsöffnungen (17) für die Lichtwellenleiter oder Wandler (18,19) eingeformt sind.

9. Vorrichtung nach Anspruch 8,
**dadurch gekennzeichnet, da**ß der quaderförmige Abschnitt des Steckers im Bereich der Stirnflächenkante eine umlaufende, gegenüber der Stirnfläche (4) zurückweichende Abschrägung (4a) aufweist.

10. Vorrichtung nach einem der vorhergehenden Ansprüche,
**dadurch gekennzeichnet, daß** die Kupplungselemente (1) aus zwei jeweils symmetrisch ausgebildeten Teilen (2,3) gebildet sind.

11. Vorrichtung nach einem der vorhergehenden Ansprüche,
**dadurch gekennzeichnet, daß** der optoelektronische Wandler eine Photodiode (18) zum Umwandeln der Lichtsignale in elektrische Signale und eine Signalumformschaltung zur Umwandlung der Signale in einen digitalen Spannungspegel umfaßt.

12. Vorrichtung nach Anspruch 11,
**dadurch gekennzeichnet, daß** der Signalumformschaltung eine weitere Verstärkerschaltung zum Verstärken der von der Signalumformschaltung gelieferten Signale auf vorgebbare Spannungspegel nachgeordnet ist.

13. Vorrichtung nach einem der vorhergehenden Ansprüche,
**dadurch gekennzeichnet, daß** der elektrooptische Wandler eine Treiberschaltung aufweist, die ein von einer Codiereinrichtung geliefertes Spannungssignal auf den zum Betrieb des elektrooptischen Wandlers (19) notwendigen Pegel verstärkt.

14. Verwendung einer Vorrichtung nach einem der vorhergehenden Ansprüche,
**dadurch gekennzeichnet, daß** in Ergänzung zur parallelen Datenübertragung seriell codierte Daten übertragen werden.

15. Verwendung nach einem der vorhergehenden Ansprüche 1 bis 13,
**dadurch gekennzeichnet, daß** die parallele Datenübertragung nach dem Centronics-Standard Protokoll erfolgt.

16. Verwendung nach einem der vorhergehenden Ansprüche 1 bis 13,
**dadurch gekennzeichnet, daß** die parallele Datenübertragung nach dem IEEE 488-Standard Protokoll erfolgt.

17. Verwendung nach einem der vorhergehenden Ansprüche 1 bis 13,
**dadurch gekennzeichnet, daß** die Lichtwellenleiter den Teil eines Transceivers eines parallelen Bit-Bus bilden, dessen Kanalzahl durch die Anzahl der Lichtwellenleiter bestimmt ist.

## Claims

1. An apparatus for transmitting data by means of an optical waveguide consisting of a data transmission line, a first coupling element (1) connected to the data transmission line and a second coupling element (14) which can be detachably coupled with the first coupling element (1) and is provided with electrooptical or optoelectronical transducers, whereby both coupling elements (1, 14) are provided with feed-through openings (5, 17) which are mutually flush in the coupled condition and in which the end surface of the optical waveguide is held associated with the electrooptical or optoelectronical transducer, characterized in that the first and the second coupling elements are provided with feed-through openings (5, 17) corresponding to at least the number of bits of the multi-bit data word to be transmitted in a parallel way, in which one optical waveguide of the data transmission line arranged as an optical waveguide bundle and that an optoelectronic transducer is arranged in a partial number of the feed-through openings (17) of the second coupling element (14), which transducer comprises a circuit with a complementary pair of transistors (T₁, T₂) with a reversed temperature behaviour, in which the first transistor (T₁) is switched as emitter follower and the second transistor (T₂) as voltage amplifier and that electrooptical transducers or further optical waveguide ends are arranged in a further partial nunber of the feed-through openings.

2. An apparatus as claimed in claim 1, characterized in that the feed-through openings (5, 17) of the coupling elements (1, 14) are arranged in an even grid measure (r) mutually distanced from one another.

3. An apparatus as claimed in claim 1 or 2, characterized in that the feed-through openings (5, 17) of the coupling elements are arranged in rows (6, 7) which are mutually offset.

4. An apparatus as claimed in one of the claims 1 to 3, characterized in that the feed-through openings (5, 17) are arranged in a duct-like manner and form on their segment averted from the face side (4, 16) of the coupling piece (1, 14) a guiding segment for the optical waveguide ends (11) or the optoelectronical transducers (18) or electrooptical transducers (19) allocated thereto.

5. An apparatus as claimed in one of the preceding claims, characterized in that each of the feed-through openings (5, 17) is expanded in a funnel-like manner in its zone associated with the interior of the coupling element (1, 14).

6. An apparatus as claimed in one of the preceding claims, characterized in that the coupling elements (1, 14), the optical waveguides (11) and the oversheath (13) of the data transmission line (12) encompassing the optical waveguides are made from jointly recyclable plastics.

7. An apparatus as claimed in one of the preceding claims, characterized in that the face side (20) of the optical waveguides (11) or the sensors (18, 19) are aligned with parallel faces to the surface of the face side (6, 16) of the coupling elements (1, 14).

8. An apparatus as claimed in one of the preceding claims, characterized in that one coupling element (1) is arranged as a plug connector and is provided with a cuboid segment, on whose free end the face side (4) of the coupling element (1) is arranged, and that the respective other coupling element (14) is provided with a respective cuboid recess (15) into which the segment of the plug connector is insertable in a form-fitting way and into whose base wall (16) the feed-through openings (17) for the optical waveguides or transducers (18, 19) are formed.

9. An apparatus as claimed in claim 8, characterized in that the cuboid segment of the plug connector is provided in the zone of the face surface edge with a continuous bevel (4a) receding from the face surface (4).

10. An apparatus as claimed in one of the preceding claims, characterized in that the coupling elements (1) are formed from two mutually symmetrically arranged parts (2,3).

11. An apparatus as claimed in one of the preceding claims, characterized in that the optoelectronic transducer comprises a photodiode (18) for converting the light signals into electrical signals and a signal transducer circuit for converting the signals into a digital voltage level.

12. An apparatus as claimed in claim 11, characterized in that the signal transducer circuit is provided in outgoing circuit with a further amplification circuit for amplifying the signals supplied by the signal transducer circuit to a predeterminable voltage level.

13. An apparatus as claimed in one of the preceding claims, characterized in that the electrooptical transducer comprises a driver circuit which amplifies a voltage signal supplied by an encoder device to the level required for the operation of the electrooptical transducer (19).

14. An application of an apparatus as claimed in one of the preceding claims, characterized in that serially encoded data are transmitted in addition to the parallel data transmission.

15. An application as claimed in one of the preceding claims 1 to 13, characterized in that the parallel data transmission is made according to the Centronics standard protocol.

16. An application as claimed in one of the preceding claims 1 to 13, characterized in that the parallel data transmission is made according to the IEEE 488 standard protocol.

17. An application as claimed in one of the preceding claims 1 to 13, characterized in that the optical waveguides form the part of a transceiver of a parallel bit bus whose number of channels is determined by the number of optical waveguides.

## Revendications

1. Dispositif pour la transmission de données au moyen de guides d'ondes lumineuses comprenant une ligne de transmission de données, un premier organe de couplage (1) relié à la ligne de transmission de données et un second organe de couplage (14) pouvant être connecté de façon amovible au premier organe de couplage (1) et présentant des transducteurs électro-optiques ou optoélectroniques, sur lequel les deux organes de couplage (1,14) connectés l'un à l'autre sont pourvus de diamètres intérieurs (5,17) alignés dans lesquels la surface terminale du guide d'ondes lumineuses est maintenue de manière à correspondre respectivement au transducteur électro-optique ou optoélectronique,
caractérisé en ce que le premier et le second organe de couplage présentent des diamètres intérieurs (5,17) correspondant au moins au débit binaire du mot porteur d'informations à plusieurs bits qu'il faut transmettre, un guide d'ondes lumineuses qui sert de ligne de transmission de données ayant la forme d'un faisceau de guides d'ondes étant maintenu dans chaque diamètre intérieur, en ce que dans une partie des diamètres intérieurs (17) du second organe de couplage (14), on a disposé un transducteur optoélectronique comprenant un circuit avec une paire complémentaire de transistors (T₁, T₂) présentant des comportements en température contraires, le premier transistor (T1) étant monté comme émetteur à montage asservi et le second (T₂) comme amplificateur de tension, et en ce que dans une autre partie des diamètres intérieurs, on a disposé des transducteurs électro-optiques ou d'autres extrémités pour guides d'ondes.

2. Dispositif selon la revendication 1, caractérisé en ce que les diamètres intérieurs (5,17) des organes de couplage (1,14) sont disposés à une certaine distance les uns des autres dans une dimension de trame (r) uniforme.

3. Dispositif selon la revendication 1 ou 2, caractérisé en ce que les diamètres intérieurs (5,17) des organes de couplage sont disposés en rangées (6,7) décalées les unes par rapport aux autres.

4. Dispositif selon l'une des revendications 1 à 3 caractérisé en ce que les diamètres intérieurs (5,17) ont la configuration d'un canal et forment sur leur section tournée vers le front (4,16) de l'organe de couplage (1,14), un segment de guidage pour les extrémités (11) pour guides d'ondes ou les transducteurs optoélectroniques (18) ou électro-optiques (19) qui leur sont respectivement affectés.

5. Dispositif selon l'une des revendications précédentes caractérisé en ce que chaque diamètre intérieur (5,17) est élargi en forme d'entonnoir dans sa partie correspondant à l'intérieur de l'organe de couplage (1,14).

6. Dispositif selon l'une des revendications précédentes caractérisé en ce que les organes de couplage (1,14), les guides d'ondes lumineuses (11) et la gaine (13) de la ligne de transmission de données (12), laquelle entoure les guides d'ondes, sont réalisés dans des matières plastiques pouvant être recyclées ensemble.

7. Dispositif selon l'une des revendications précédentes caractérisé en ce que le front (20) du guide d'ondes (11) est orientée de façon parallélépipédique par rapport à la surface du front (4,16) des organes de couplage (1,14).

8. Dispositif selon l'une des revendications précédentes caractérisé en ce qu'un organe de couplage (1) est configuré comme une fiche et présente une section parallélépipédique sur l'extrémité libre de laquelle est formé le front (4) de l'organe de couplage (1) et en ce que l'autre organe de couplage (14) présente un évidement (15) de forme parallélépipédique équivalente dans lequel la section de la fiche peut être introduite en engagement positif de forme et dans le fond (16) duquel on a moulé les diamètres intérieurs (17) pour les guides d'ondes ou transducteurs (18,19).

9. Dispositif selon la revendication 8 caractérisé en ce qu'à la hauteur de l'arête de la surface extérieure, la section parallélépipédique de la fiche présente un biseautage (4a) circulaire et en retrait par rapport à la surface extérieure (4) à la hauteur de l'arête.

10. Dispositif selon l'une des revendications précédentes caractérisé en ce que les organes de couplage (1) sont formés de deux parties (2,3) symétriques.

11. Dispositif selon l'une des revendications précédentes caractérisé en ce que le transducteur optoélectronique comprend une photodiode (18) servant à convertir les signaux lumineux en signaux électriques et un circuit de conditionnement de signaux servant à convertir les signaux en un niveau de tension numérique.

12. Dispositif selon la revendication 11 caractérisé en ce qu'un autre circuit d'amplification servant à amplifier jusqu'à un niveau de tension définissable les signaux fournis par le circuit de conditionnement est monté en aval de celui-ci.

13. Dispositif selon l'une des revendications précédentes caractérisé en ce que le transducteur électro-optique est pourvu d'un circuit d'excitation qui amplifie le signal de tension fourni par un dispositif de codage jusqu'au niveau requis pour que le transducteur électro-optique (19) fonctionne.

14. Utilisation d'un dispositif selon l'une des revendications précédentes caractérisée en ce que des données codées en série sont transmises en complément de la transmission parallèle.

15. Utilisation selon l'une des revendications 1 à 13 caractérisée en ce que la transmission de données parallèle s'effectue conformément au protocole standard Centronics.

16. Utilisation selon l'une des revendications 1 à 13 caractérisée en ce que la transmission de données parallèle s'effectue conformément au protocole standard IEEE 488.

17. Utilisation selon l'une des revendications 1 à 13 caractérisée en ce que les guides d'ondes forment la partie d'un émetteur-récepteur d'un bus binaire parallèle dont le nombre de canaux est déterminé par le nombre de guides d'ondes.
